# EUROPEAN PATENT SPECIFICATION

(11) **EP 1 749 687 B1**
(45) Date of publication and mention of the grant of the patent: **23.04.2008**
(21) Application number: 05016943.2
(22) Date of filing: 04.08.2005
(51) Int. Cl.: B60K 31/00, B60R 21/00

(54) **Automatic collision management system**
Automatisches Kollisions-Management System
Système de gestion de collision automatique

(43) Date of publication of application: 07.02.2007
(60) Divisional application: 08152678.2
(73) Proprietor: Ford Global Technologies, LLC, Dearborn, MI 48126 (US)
(72) Inventor: Carlstedt, Hans, 433 69 Partille (SE); Andersson, Thomas, 437 40 Lindorne (SE); Ekmark, Jonas, 424 70 Olofstorp (SE); Löfving, Björn, 417 64 Göteborg (SE); Edvardsson, Mikael, 416 69 Göteborg (SE); Broberg, Thomas, 414 64 Göteborg (SE)
(74) Representative: Norris, Timothy Sweyn

(56) References cited:
- EP-A- 1 349 131
- EP-A- 1 388 456
- DE-A1- 19 900 314
- DE-C1- 19 534 942
- US-A- 5 529 138
- US-B1- 6 405 132

## Description

### TECHNICAL FIELD

The present invention relates to automatic collision management systems for road vehicles, for example personal automobiles as well as freight vehicles. Moreover, the present invention also concems sensor configurations adapted for incorporation into such road vehicles for implementing such collision management systems. Furthermore, the present invention relates to methods of operating such automatic collision management systems.

### BACKGROUND OF THE INVENTION

In many traffic scenarios encountered in urban locations, for example in city traffic, distances between moving and stationary objects are often relatively short, for example a few meters. Drivers of vehicles in such scenarios are confronted with complex situations in which the drivers are susceptible to being momentarily distracted. A momentary distraction can, for example, result in one or more collisions.

Collision avoidance systems for road vehicles are known. For example, in a published United States patent no. US 6, 260, 880 (Satoshi Hada et al.), there is described a vehicle safety travel device operable to implement automatic braking to prevent a subject vehicle coming into contact with an object, and to reliably prevent, when appropriate, expansion of an air bag. The device determines relative speed between the subject vehicle and the object based on output from a radar device. The radar device is located at a front position of a corresponding road vehicle, the front position being foremost when the vehicle is travelling in a forward direction.

In another published United States patent no. US 6, 278, 924 (Gioutsos), there is disclosed a motor vehicle safety system whose deployment is controlled by an algorithm operable to calculate frontal crash velocity and vehicle occupant status. The system employs a radar-type crash velocity detection system. When a crash is determined by the system to be occurring based on accelerometer data, the algorithm determines a velocity of impact measure. This measure is employed to set a minimum velocity, for example 22.5 km/hour, below which the safety system is not deployed. In other words, the vehicle safety system is only deployed when the vehicle crash velocity is greater than the measure. The system is therefore not operable below the measure, for example in dense slow-moving traffic scenarios encountered in city traffic. Although the published patent is described as utilizing Doppler radar techniques, it is further disclosed that ultrasonic sensor using micropulses or optical techniques may alternatively be employed for determining crash velocity.

In a yet further published United States patent no. US 3, 898, 652 (Rashid), there is described a vehicle safety system for detecting objects in a vicinity of the vehicle. The system comprises a front sensor and a rear sensor. Each of these sensors includes a Doppler radar and side sensors including proximity radars. The system further includes a signal processing unit for receiving outputs from the front and rear sensors and a vehicle velocity sensor for generating an indication of the vehicle's capability of stopping prior to colliding with an object detected in front of the vehicle. Output from the signal processing unit can be applied to the vehicle's brakes and accelerator controls for slowing down the vehicle if the driver or operator of the vehicle does not respond properly to a warning signal generated by the signal processing unit.

A problem encountered is that collision-avoidance systems described in the foregoing published United States patents are not optimal in city-traffic situations wherein a complex juxtaposition of moving and stationary objects is often encountered. There is thus a requirement for increased vehicular collision management, especially in city and urban situations.

A system according to the preamble of claim 1, resp. a method according to the preamble of claim 20 is known in the prior art, e.g. DE 199 00 314 A1.

### SUMMARY OF THE INVENTION

An object of the invention is to provide an automatic collision management system for road vehicles and a method for providing automatic braking in a vehicle. The invention is defined in claim 1 resp. claim 20.

, There is provided an automatic collision management system for a vehicle, said vehicle including operating features including one or more brakes operable when applied to decelerate said vehicle, said automatic collision management system including a sensor arrangement operable to detect closing velocities of one or more oncoming objects substantially in a direction of travel of the vehicle, and a processing arrangement for receiving information from the sensor arrangement indicative of said detected closing velocities, said processing arrangement being operable when the vehicle is travelling below a threshold speed to automatically selectively apply said operating features including said one or more brakes to decelerate the vehicle in response to said information received from the sensor arrangement for avoiding or mitigating a crash of the vehicle into said one or more oncoming objects.

An advantage of the present invention is that the automatic collision management system becomes effective when the vehicle is travelling at a speed below the threshold speed to mitigate or avoid potential crashes.

In the automatic collision management system, the one or more brakes are inactive to provide automatic braking at or above the threshold speed. Rendering the automatic collision management system inactive when the vehicle is travelling at speeds above the threshold speed is of benefit in that vehicle operation is not compromised at vehicle speeds above the threshold speed.

In the automatic collision management system, the threshold speed is in a range of 10 km/hour to 30 km/hour. More preferably, the threshold speed is substantially 20 km/hour. Such speed ranges are found to be an optimal practical compromise so that a driver of the vehicle has time to respond to the automatic braking being applied, with the automatic collision avoidance system serving to operate only when necessary.

In the automatic collision management system, the processing arrangement is operable to cause the one or more brakes of the vehicle to decelerate the vehicle at a rate in a range of 1 metre/second/second to 5 metres/second/second. More preferably, the processing arrangement is operable to cause the one or more brakes of the vehicle to decelerate the vehicle at a rate of substantially 3 metres/second/second. Such rates of deceleration are a practical compromise between crash avoidance and crash mitigation.

Preferably, in the automatic collision management system, the sensor arrangement includes a closing velocity sensor operable to employ one or more infrared laser sensors for sensing the one or more oncoming objects. More preferably, said one or more infrared laser sensors are operable to employ pulse-echo and/or Doppler optical frequency shift analysis to detect said one or more oncoming objects.

Preferably, in the automatic collision management system, said sensor arrangement is operable to sense said one or more oncoming objects at a distance in a range of 4 to 10 metres from the vehicle. More preferably, said sensor arrangement is operable to sense said one or more oncoming objects at a distance in a range of 6 to 8 metres from the vehicle. Such a sensing range is a practical compromise between being able to sense one or more objects which are susceptible to being a crash risk but without collecting so much information that data processing becomes intractable.

Preferably, in the automatic collision management system, the sensor arrangement is adapted to be mounted behind a windscreen of the vehicle through which a driver of the vehicle observes a region in front of the vehicle, the sensor arrangement being operable to sense the one or more oncoming objects via the windscreen. Such spatial location of the sensor arrangement within the vehicle is of benefit in that the sensor arrangement is physically protected from damage, and that measures taken by the driver of the vehicle to maintain a windscreen of the vehicle clean for ensuring a satisfactory field of view also provides the sensor arrangement with a clear field of view. More preferably, the sensor arrangement is adapted to be mounted towards an upper region of the windscreen.

Preferably, in the automatic collision management system, the sensor arrangement is included in a windscreen electronic module (WEM). More preferably, the windscreen electronic module is integral as a unit with the windscreen. Including the sensor arrangement within a windscreen electronic module results in less component assemblies to be handled during initial assembly of the vehicle, thereby potentially decreasing its cost of manufacturing and easing subsequent routine maintenance of the vehicle.

Preferably, in the automatic collision management system, the windscreen electronic module (WEM) includes other sensors in addition to the sensor arrangement. Beneficially, the windscreen electronic module includes other types of sensors so as to enhance functionality provided from the module to the vehicle whilst not further complicating manufacture of the vehicle.

Preferably, in the automatic collision management system, the processing arrangement and the one or more brakes are coupled in mutual communication via one or more data communication networks of the vehicle. More preferably, the one or more communication networks are implemented as one or more of: HS_CAN, MS_CAN, CAN, LIN. Yet more preferably, the processing arrangement and the one or more brakes are mutually coupled by plurality of parallel communication network paths for improving braking reliability for mitigating or avoiding impact with said one or more oncoming objects.

Preferably, the automatic collision management system is operable to deploy other operational measures in addition to said automatic selective application of said one or more brakes, said other operational measures including at least one of: an audio warning, a visual warning, adaptive vehicle steering adjustment, driver pedal decoupling, adaptive seatbelt adjustment, and air bag deployment. More preferably, the processing arrangement is operable to activate the audio warning and/or the visual warning prior to said one or more brakes being applied to decelerate the vehicle. More preferably, said adaptive seatbelt adjustment is operable to tension one or more seatbelts of the vehicle in combination with said one or more brakes being applied to decelerate the vehicle.

Preferably, in the automatic collision management system, the sensor arrangement is also operable to sense precipitation external to the vehicle, and the processing arrangement is operable to modify the threshold speed and/or the deceleration of the vehicle in response to the sensed precipitation external to the vehicle. Such dynamic adjustment of the threshold speed and/or the deceleration of the vehicle is capable of enhancing vehicle control under adverse weather conditions.

Preferably, there is provided a vehicle including an automatic collision management system according to the first aspect of the invention, the system being operable to provide in operation automatic deceleration of said vehicle for crash mitigation or crash avoidance, when the vehicle is travelling below a threshold speed, said automatic collision management system being disabled in operation when said vehicle is travelling at or above the threshold speed.

Preferably, there is provided a windscreen electronic module (WEM) including a closing velocity sensor arrangement for implementing an automatic collision management system according to the first aspect of the invention, said closing velocity sensor arrangement including one or more infrared lasers for generating laser beams for detecting in operation closing velocities of one or more oncoming objects.

According to the present invention, there is provided a method of providing automatic collision management in a vehicle, said vehicle including an automatic collision management system including a sensor arrangement coupled in communication with a processing arrangement and one or more brakes of the vehicle, said method including steps of:
(a) employing the sensor arrangement to detect closing velocities of one or more oncoming objects in a direction of travel of the vehicle;
(b) receiving information at the processing arrangement from the sensor arrangement describing said closing velocities of said one or more oncoming objects, and assessing from said information whether or not a crash between said one or more oncoming objects and the vehicle is likely, and
(c) automatically applying said one or more brakes of the vehicle when a risk of a crash is determined by the processing arrangement to be likely, wherein said automatic braking is applied only if the vehicle is travelling in operation at a speed which is less than a threshold speed.

In the method, the threshold speed is in a range of 10 Km/hour to 30 km/hour. More preferably, the threshold speed is substantially 20 km/hour.

In the method, the processing arrangement is operable to cause the vehicle to decelerate at a rate in a range of 1 metres/second/second to 5 metres/second/second in an event of one or more oncoming objects being detected. More preferably, the processing arrangement is operable to cause the vehicle to decelerate at a rate of substantially 3 metres/second/second in an event of one or more oncoming objects being detected.

Preferably, the method includes a step of arranging for the sensor arrangement to generate a plurality of infrared beams of optical radiation for sensing said one or more oncoming objects. More preferably, the method includes a further step of directing the infrared beams of optical radiation through a windscreen of said vehicle for sensing said one or more oncoming objects.

Preferably, in the method, the sensor arrangement is also operable to sense precipitation external to the vehicle, and the processing arrangement is operable to modify the threshold speed and/or the deceleration of the vehicle in response to the sensed precipitation external to the vehicle. Such dynamic adjustment of the threshold speed and/or the deceleration of the vehicle is capable of enhancing vehicle control under adverse weather conditions.

It will be appreciated that features of the invention are susceptible to being combined in any combination without departing from the scope of the invention as defined by the appended claims.

### BRIEF DESCRIPTION OF THE DRAWINGS

By way of example only, embodiments of the invention will now be described with reference to the accompanying drawings wherein:
- Figure 1: is a schematic illustration of a vehicle in side view, the vehicle including therein a data communication network with a closing velocity sensor for implementing an automatic collision management system pursuant to the present invention;
- Figure 2: is a schematic illustration of the communication network of the vehicle illustrated in Figure 1, the network including the closing velocity sensor for implementing automatic braking at relatively lower vehicle speeds;
- Figure 3: is a graph illustrating crash energy reduction provided by the automatic collision management system of the invention; and
- Figure 4: is a schematic top-view illustration of a mounting arrangement for the closing velocity sensor, the mounting arrangement concerning inclusion of the closing velocity sensor within a windscreen electronic module (WEM) and environmentally protected by a windscreen of the vehicle in Figure 1.

### DETAILED DESCRIPTION OF PREFERRED EMBODIMENTS

Embodiments of the invention described below are operable to provide automatic collision management, for example automatic braking, in situations in which a driver of a vehicle is confronted with a situation wherein distances are relatively short between moving and stationary objects in front of the vehicle, Such a situation can become critical when the driver experiences short moments of distraction. Moreover, automatic braking is implemented at vehicle speeds lying below a threshold. Preferably, other operating features are additionally deployed in conjunction with the automatic braking being invoked; such other operating features are provided in Table 1.

**Table 1: Additional operative features**

| **Additional operative feature** | **Example** |
|---|---|
| Vehicle adaptive steering adjustment | A steering wheel of the vehicle is thrusted by servos towards a driver of the vehicle to reduce a risk of an impact of the driver onto a windscreen of the vehicle in crash avoidance or crash mitigation situations. |
| Dynamic seatbelt adjustment | Seatbeits of the vehicle are tightened and/or mini-airbags in the seatbelts are triggered to better restrain the driver of the vehicle in crash avoidance or crash mitigation situations. |
| Dynamic pedal decoupling | Driver-operated pedals of the vehicle are decoupled to reduce driver foot and ankle injuries in crash avoidance or crash mitigation situations. |
| Airbags | Steering wheel airbag deployment, dash-boards airbag deployment in crash avoidance or crash mitigation situations. |
| Audio warning | An audio warning is provided to a driver of a vehicle, for example a bleeping sound is generated prior to one or more brakes of the vehicle being automatically applied in crash avoidance or crash mitigation situations. |
| Visual warning | A visual warning is provided to a driver of a vehicle, for example a flashing warning light is activated, prior to one or more brakes of the vehicle being automatically applied in crash avoidance or crash mitigation situations. |

For example, the threshold is conveniently set in a range of 10 to 30 km/hour, more optionally substantially 20 km/hour. Moreover, the automatic braking is optionally applied with deceleration in a range of 1 to 5 metres/second/second, more optionally at a deceleration of substantially 3 metres/second/second. The embodiments each employ a closing velocity (CV) sensor for collecting pre-crash data and thereby enabling an algorithm implemented in processing hardware of the embodiments to compute a closing velocity for determining whether or not automatic, namely autonomous, vehicle braking should be applied. Such automatic braking is, for example, of benefit in avoiding or mitigating relatively low speed frontal collisions and thereby potentially reducing costly vehicle damage as well as providing occupant protection, for example whiplash protection, pedestrian protection and so forth. The closing velocity (CV) sensor algorithm is beneficially implemented in combination with a supplementary restraints system (SRS) included in the embodiments. As well as providing automatic braking, the embodiments of the invention are also optionally configured to deploy supplementary restraints in an event of mitigating or avoiding a crash; such supplementary restraints include, for example, air bags.

In embodiments of the invention described below, closing velocity sensors incorporated therein are implemented using multiple-channel laser sensors. Preferably, each sensor has three channels. Moreover, one or more lasers utilized in each of the sensors are preferably infrared (IR) lasers. Furthermore, the lasers sensors preferably have a detection range from 4 to 10 metres, more preferably from 6 to 8 metres. As will be elucidated in greater detail later, the laser sensors are beneficially implemented in windscreen electronic modules (WEM), thereby potentially benefiting from physical protection by way of such windscreens as well as being provided a potentially clear field of view as desired by drivers for their windscreens. Moreover, integration of the laser sensors with windscreens means that vehicle assembly is not unduly made more complicated by additional components being needed to be handled during such vehicle assembly.

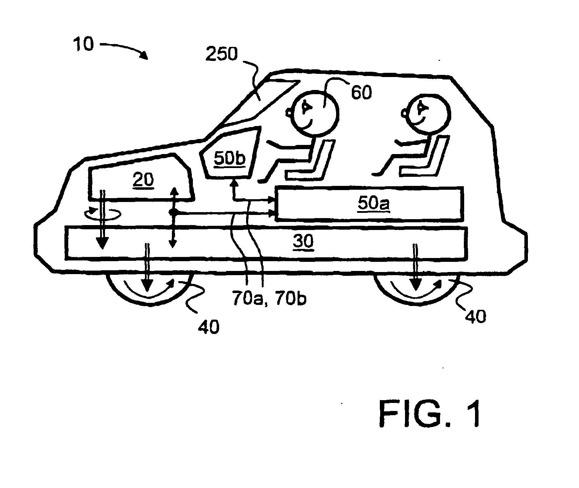

Referring to Figure 1, there is shown a road vehicle indicated generally by 10 including an automatic collision avoidance system according to the present invention. The vehicle 10 comprises an engine 20 for providing motive power, the engine 20 being coupled via a transmission arrangement 30 to one or more wheels 40 of the vehicle 10. Moreover, the vehicle 10 includes a configuration of sub-systems denoted generally by 50a, 50b coupled to associated data networks 70a, 70b for assisting a driver 60 of the vehicle 10 to operate the vehicle 10.

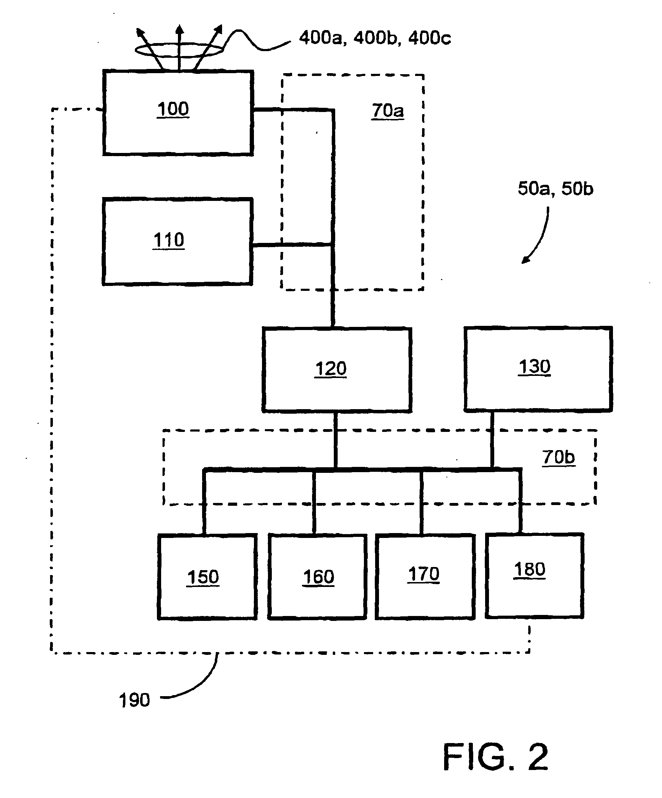

The configuration of sub-systems 50a, 50b is illustrated schematically in greater detail in Figure 2. The data networks 70a, 70b are optionally implemented to conform to conventional standards, for example in conformity with the HS-CAN or MS_CAN standard devised by Koninklijke Philips Electronics N.V. The HS-CAN standard was originally developed for engine management networks but is increasingly being adopted by motor manufacturers for passenger safety and comfort functions as well as providing a backbone for diverse vehicle functions.

Referring now to Figure 2, the aforesaid configuration of sub-systems 50a. 50b comprises a closing velocity (CV) sensor 100 and a driver information module (DIM) 110; the closing velocity (CV) sensor 100 is based on aforementioned IR-laser components. The closing velocity (CV) sensor 100 and the module 110 are coupled via the MS_CAN network 70a to a central electronic module (CEM) 120 also forming a part of the configuration of sub-systems 50a, 50b. The central electronic module 120 is, in turn, coupled to the HS_CAN network 70b. The HS_CAN network 70b is also coupled to a steering angle sensor (SAS) 130, to a brake control module (BCM) 150, to a transmission control module (TCM) 160, to an engine control module (ECM) 170, and to a supplementary restraints system (SRS) 180. The sensors 100, 130, the control modules 150, 160, 170, and the restraints system 180 are also included in the aforementioned configuration of sub-systems 50a, 50b. Optionally, a dedicated additional communication network denoted by 190, for example implemented as a CAN or LIN network, is included for enabling the closing velocity sensor 100 and the supplementary restraints system 180 to directly mutually communicate. This optional additional communication network 190 is capable of providing enhanced reliability of communication between the closing velocity sensor 100 and the supplementary restraints system 180. The supplementary restraints system 180 includes a range of operative features such as airbags, one or more brakes and other structures operable to reduce injury to the driver 60 and other occupants in the vehicle 10 in an event of a potential crash of the vehicle 10; the other structures are, for example, elucidated in the aforesaid Table 1.

Operation of the vehicle 10 will now be described in overview. The vehicle 10 is operable to move by way of motive power being coupled from the engine 20 via the transmission arrangement 30 to the one or more wheels 40. Controls accessible to the driver 60 are actuated by the driver 60 for controlling speed, direction of travel, and braking of the vehicle 10.

In an event that the vehicle 10 is travelling at a speed of less than the threshold of, for example, 20 km/hour, the configuration of sub-systems 50a, 50b is operable to implement aforementioned automatic braking in situations in which the closing velocity sensor 100, in combination with its signal processing software executing on computing hardware, identifies a risk of crash of the vehicle 10. In a scenario wherein an impact of the vehicle 10 onto an object is likely, the sensor 100 autonomously sends warning messages via the data network 70b to the brake control module 150 so that the vehicle 10 decelerates at a rate of, for example, substantially 3 metres/second/second; prior to the brake control module 150 operating to decelerate the vehicle 10, the configuration of sub-systems 50a, 50b is preferably operable to provide the driver 60 with at least one of an audio warning and a visual warning indicative that the vehicle 10 will be thereafter subject to automatic deceleration. Alternatively, or additionally, the closing velocity (CV) sensor 100 communicates directly via one or more of the additional communication networks to the supplementary restraints system 180, for example, the restraints system 180 may also include a braking function as described in the foregoing. As well as applying deceleration to the vehicle 10, the messages sent from the closing velocity (CV) sensor 100 can also trigger deployment of other secondary restraints, for example air bags or similar energy absorbing structures as elucidated in Table 1, for example to cause seatbelt tensioning in preparation for a potential crash. Such seatbelt tensioning is effective at potentially reducing occupant chest injuries in a crash situation.

It is to be appreciated that the threshold is optionally chosen to be at a relatively slow speed, in comparison to a maximum speed that the vehicle 10 is capable of travelling. Moreover, the rate of deceleration described in the foregoing is chosen to be a compromise between avoiding excessively abrupt automatic braking, and reducing the vehicle's 10 kinetic energy as much as possible so as to try to reduce potential impact damage to the vehicle 10 and injury to the driver 60.

In an event of the data networks 70a, 70b becoming overloaded with data flow or malfunctioning at a critical moment, the additional network 190 is capable of providing one or more additional communications paths, for example by way of redundancy, thereby enhancing communication reliability so that automatic braking is more reliably provided in operation in crash situations.

The automatic braking function provided in the vehicle 10 is optionally configured for achieving crash avoidance when the vehicle 10 is travelling at speeds of less than 12 km/h, namely substantially less than 3.5 metres/second speed; in such case, the vehicle 10 is brought to a stationary state within substantially 1 second after the closing velocity sensor 100 detects a potential impact.

Moreover, the automatic braking function in the vehicle 10 is optionally configured for achieving crash mitigation when the vehicle 10 is travelling at speeds in a range of 12 km/h to 20 km/h; at a speed of 20 km/h, the vehicle 10 is potentially brought to a stationary state within a period of substantially 2 seconds. However, the range of the closing velocity sensor 100, as elucidated in the foregoing, is, for example, only 6 to 8 metres which corresponds to circa 1.5 seconds travel at 20 km/h. On account of such range limitation, it will be appreciated that crash mitigation is possible to achieve in the speed range of 12 km/h to 20 km/h.

However, providing the closing velocity sensor 100 with a range of more than 6 to 8 metres potentially results in more data being collected by the sensor 100 than necessary for crash avoidance or crash mitigation, thereby potentially resulting in a risk of spurious reflections of beams emitted from the sensor 100 from objects which are not hazardous to the vehicle 10. Conversely, a smaller range than 6 to 8 metres renders the automatic collision management system potentially less effective in operation at providing crash avoidance or crash mitigation for the vehicle 10. Thus, the range of 6 to 8 metres is found to be especially suitable in practice.

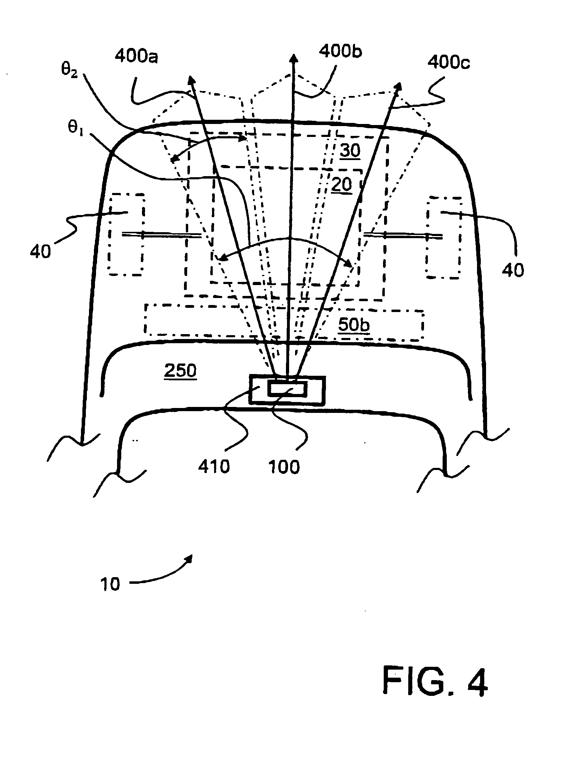

The closing velocity (CV) sensor 100 is optionally mounted at a position in the vehicle 10 whereat it is able to most optimally sense oncoming objects in front of the vehicle 10 and yet be robust to contamination, dirt, condensation, solar radiation and potential damage from stones and other small objects encountered in road environments. Moreover, the closing velocity (CV) sensor 100 is optionally included in the vehicle 10 in a position most suitable for simplifying manufacture. The closing velocity (CV) sensor 100 is most beneficially included in the vehicle as a windscreen electronic module (WEM). A windscreen 250 of the vehicle 10 is therefore optionally arranged to exhibit sufficient infrared transmission at a radiation wavelength of 905 nm substantially at which the closing velocity sensor 100 operates. In this respect, it is desirable that the closing velocity sensor 100 be included behind the windscreen 250 so that the windscreen 250 provides mechanical and weather protection for the sensor 100 and an environment within the vehicle 10 avoids problems with condensation; such an arrangement is illustrated schematically in Figure 4 whereat the electronic module (WEM) is mounted towards an upper region of the windscreen 250. Alternatively, or additionally, the closing velocity (CV) sensor 100 can also be included in combination with one or more front headlamp units of the vehicle 10, for example protected by their glass front covers; the glass front covers are beneficially operable to be transmissive to radiation having a wavelength corresponding to that of the three beams of infrared radiation generated by the closing velocity sensor 100 when in operation.

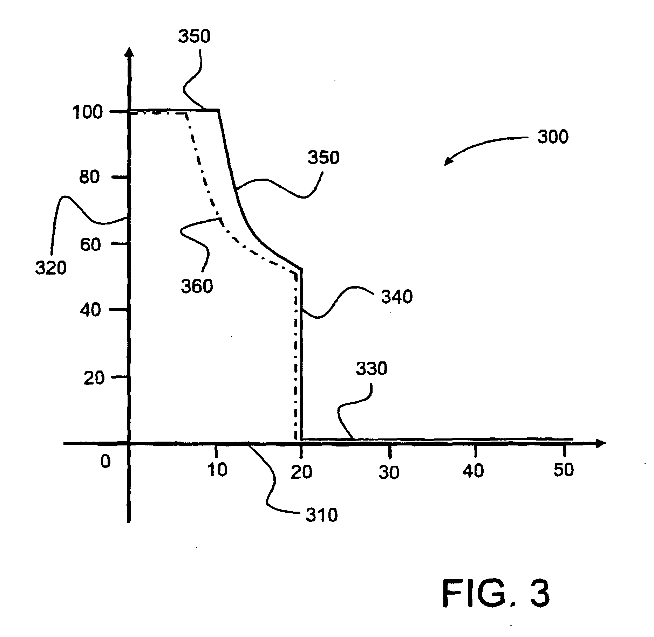

A crash energy reduction provided by the automatic collision management system pursuant to the present invention described in the foregoing is illustrated in Figure 3. In Figure 3, there is shown a graph indicated generally by 300. The graph 300 includes an abscissa axis 310 representing speed of the vehicle 10 in km/hour prior to automatic braking pursuant to the present invention being applied. Moreover, the graph 300 includes an ordinate axis 320 representing energy reduction provided to the vehicle by virtue of the aforesaid automatic braking. The automatic collision management system included in the vehicle 10 is operable to provide the vehicle 10 with energy reduction as represented by a curve on the graph, the curve being identified by curve sections 330 to 360. For speeds of the vehicle above 20 km/hour, the automatic collision management system is arranged not to intervene to provide braking, consequently, the curve section 330 then pertains wherein zero energy reduction is provided by the automatic collision management system. For speeds of the vehicle 10 around the aforesaid threshold speed of 20 km/hour, the automatic collision management system is operational to provide a degree of crash mitigation as represented by a curve section 340. Moreover, for speeds of the vehicle 10 below substantially 12 km/hour, the automatic collision management system is capable of decelerating the vehicle 10 to standstill, thereby avoiding impact and hence providing 100% crash energy reduction. In a speed range of the vehicle from substantially 12 km/hour to 20 km/hour, the automatic collision management system is operable to provide deceleration but unable to bring the vehicle to a complete standstill before the vehicle impacts onto stationary objects, thereby providing a degree of crash mitigation as represented by a curve section 350.

It will be appreciated that the curve sections 330 to 360 shown in Figure 3 will alter in form if the detection range of the closing velocity (CV) sensor 100 is modified, the deceleration rate of the automatic collision management system is altered, and the aforesaid threshold speed below which automatic braking is implemented is altered. For example, a slower rate of deceleration than 3 metres/second/second, for example substantially 2 metres/second/second, results in a crash energy reduction characteristic as represented by a curve 360.

In Figure 4, an example of spatial positioning of the closing velocity (CV) sensor 100 within the vehicle 10 is illustrated. The closing velocity (CV) sensor 100 is located optionally behind the windscreen 250 at an upper region thereof, although other positions can be adopted if required. More optionally, the closing velocity (CV) sensor 100 is included as part of a windscreen electronic module (WEM) 410. Conveniently, the WEM 410 can also include other sensors, for example optical sensors for monitoring headlights of on-coming vehicles so as to provide the vehicle 10 with an automatic headlight-dimming function. For example, the closing velocity (CV) sensor 100 is itself synergistically additionally capable of functioning as a precipitation sensor, for example a rain sensor, and as an ambient light sensor. Optionally, the aforementioned threshold speed and/or the aforementioned rate of deceleration in crash avoidance or crash mitigation situations can be modified in response to a precipitation condition detected by the closing velocity (CV) sensor 100, for example to enhance controllability of the vehicle 10 in wet or icy conditions.

The windscreen 250 is, as described earlier, fabricated from a material which allows three pulsed beams of infrared radiation 400a, 400b, 400c to propagate through the windscreen 250 and be subsequently reflected from oncoming objects in front of the vehicle 10 to generate corresponding reflected radiation which is received back at the closing rate (CV) sensor 100. By one or more of pulse-echo signal detection techniques and optical Doppler shift techniques, closing velocities of the oncoming objects can be computed at the closing rate sensor 100.

Implementation and operation of the closing velocity sensor 100 will now be described in greater detail. The closing velocity (CV) sensor 100 is designed to be optionally mounted at a relatively high position onto or close to the windscreen 250 of the vehicle 10. Such a mounting position potentially provides an optimal field of view of a region in front of the vehicle 10, namely in a region wherein one or more potential impact hazards are likely to be encountered. The sensor 100 employs the three beams 400a, 400b, 400c to provide a sensing field having an approximate lateral angular extent of θ₁ = 45° as depicted in Figure 4. The sensing field is partitioned into three sectors, each sector being served by its corresponding beam 400a, 400b, 400c, such that the beams 400a, 400b, 400c each provide a lateral sensing coverage having an angel of substantially θ₂ = 15° as depicted in Figure 4. Moreover, each beam 400a, 400b, 400c also provides a vertical field of sensing of substantially 8° with an inclination of substantially 4° in respect of a horizontal plane. Each sensing sector is provided with a set of three corresponding lenses in the sensor 100. Moreover, light sensitive diodes are employed, each in combination with its three lenses, to sense reflection of the beams 400a, 400b, 400c reflected back to the sensor 100. The diodes and their respective lenses are beneficially optically shielded from their corresponding lasers employed for generating the beams 400a, 400b, 400c to reduce direct coupling of optical radiation from the lasers to their respective light sensitive diodes. The lasers employed within the sensor 100 optionally exhibit an output radiation wavelength of substantially 905 nanometres and are class I laser category with regard to their radiation power output.

In operation, the closing velocity (CV) sensor 100 provides distance and velocity information regarding one or more oncoming objects in front of the vehicle 10 at an update rate of substantially 100 Hz, namely at 10 millisecond intervals. When measuring position and velocity, a sensing cycle is optionally implemented in the sensor 100 for each of the sectors. The cycle commences by each laser in the sensor 100 providing a burst of laser radiation for emission from the sensor 100. The burst has a duration of 2 milliseconds and comprises 100 pulses of radiation, wherein each pulse has a duration of substantially 30 nanoseconds. For each pulse emitted from the sensor 100, the aforesaid light sensitive diodes are scanned for substantially 100 nanoseconds to derive reflected radiation signals. Thereafter, a sum of all intensities in the reflected radiation signals are used for performing a distance calculation, the calculation optionally being implemented using a simple "centre of mass" approach, thereby simplifying computation required. From a determination of distance as a function of time, a closing velocity can therefrom be derived. Thus, in overview, the sensor 100 employs time-of-flight (TOF) measurements of IR-laser pulses to calculate relative distances between the vehicle 10 and one or more potentially hazardous objects in front of the vehicle 10; measured distance changes within a well-defined period of time are used to generate relative velocity data and hence aforesaid closing velocity data for the automatic collision management system.

However, it will be appreciated that the closing velocity (CV) sensor 100 can also be implemented using optical or radar Doppler techniques, wherein a portion of reflected radiation from one or more oncoming objects in a direction of travel of the vehicle 10 is mixed at the sensor 100 with a portion of radiation emitted from the sensor 100 towards the one or more oncoming objects to generate a Doppler beat signal from which a measure of closing velocity of the one or more objects to the vehicle 10 can be derived.

It will be appreciated that embodiments of the invention described in the foregoing are susceptible to being modified without departing from the scope of the invention.

Although application of the present invention in the context of a road vehicle is described in the foregoing, it will be appreciated that the present invention is also applicable to trucks, lorries, vans, motorcycles, motorbikes and scooters to mention some examples. The term "vehicle" in the accompanying claims is therefore to be construed to include at least such a range of vehicle types.

Numerals included within parentheses in the accompanying claims are included to assist appreciation of subject matter claimed in the accompanying claims and are not intended to limit scope of the claims.

## Claims

1. An automatic collision management system (50a, 50b, 100, 180) for a vehicle (10), said vehicle (10) including operating features including one or more brakes operable when applied to decelerate said vehicle (10), said automatic collision management system (50a, 50b, 100, 180) including a sensor arrangement (100) operable to detect closing velocities of one or more oncoming objects substantially in a direction of travel of the vehicle (10), and a processing arrangement (50a, 50b, 100, 180) for receiving information from the sensor arrangement (100) indicative of said detected closing velocities, said processing arrangement (50a, 50b, 100, 180) being operable when the vehicle (10) is travelling below a threshold speed to automatically selectively apply said operating features including said one or more brakes to decelerate the vehicle (10) in response to said information received from the sensor arrangement (100) for avoiding or mitigating a crash of the vehicle (10) into said one or more oncoming objects, **characterised by** the collision management system being inactive to provide automatic braking at or above the threshold speed, said threshold speed being in a range of 10 km/hour to 30 km/hour, and the processing arrangement (50a, 50b, 100, 180) is operable to cause the one or more brakes of the vehicle (10) to decelerate the vehicle at a rate in a range of 1 metre/second/second to 5 metres/second/second.

2. An automatic collision management system (50a, 50b, 100, 180) as claimed in claim 1, wherein the threshold speed is substantially 20 km/hour.

3. An automatic collision management system (50a, 50b, 100, 180) as claimed in claim 1 or 2, wherein the processing arrangement (50a, 50b, 100, 180) is operable to cause the one or more brakes of the vehicle (10) to decelerate the vehicle (10) at a rate of substantially 3 metres/second/second.

4. An automatic collision management system (50a, 50b, 100, 180) as claimed in any one of claims 1 to 3, wherein the sensor arrangement (100) includes a closing velocity sensor operable to employ one or more infrared laser sensors for sensing the one or more oncoming objects.

5. An automatic collision management system (50a, 50b, 100, 180) as claimed in claim 4, wherein said one or more infrared laser sensors (100) are operable to employ pulse-echo and/or Doppler optical frequency shift analysis to detect said one or more oncoming objects.

6. An automatic collision management system (50a, 50b, 100, 180) as claimed in any one of claims 1 to 5, wherein said sensor arrangement (100) is operable to sense said one or more oncoming objects at a distance in a range of 4 to 10 metres from the vehicle (10).

7. An automatic collision management system (50a, 50b, 100, 180) as claimed in claim 6, wherein said sensor arrangement (100) is operable to sense said one or more oncoming objects at a distance in a range of 6 to 8 metres from the vehicle (10).

8. An automatic collision management system (50a, 50b, 100, 180) as claimed in any one of claims 1 to 7, wherein the sensor arrangement (100) is adapted to be mounted behind a windscreen (250) of the vehicle (10) through which a driver (60) of the vehicle (10) observes a region in front of the vehicle (10), the sensor arrangement (100) being operable to sense the one or more oncoming objects via the windscreen (250).

9. An automatic collision management system (50a, 50b, 100, 180) as claimed in claim 8, wherein said sensor arrangement (100) is adapted to be mounted towards an upper region of the windscreen (250).

10. An automatic collision management system (50a, 50b, 100, 180) as claimed in any one of claims 1 to 7, wherein said vehicle (10) includes a windscreen electronic module (410), and said sensor arrangement (100) is included in said windscreen electronic module (410).

11. An automatic collision management system (50a, 50b, 100, 180) as claimed in claim 10, wherein the windscreen electronic module (410) is integral as a unit with a windscreen (250) of the vehicle (10).

12. An automatic collision management system (50a, 50b, 100, 180) as claimed in claim 10, wherein the windscreen electronic module (410) includes other sensors in addition to the sensor arrangement (100).

13. An automatic collision management system (50a, 50b, 100, 180) as claimed in any one of the preceding claims, wherein the sensor arrangement (100), the processing arrangement (50a, 50b, 100, 180) and the one or more brakes are coupled in mutual communication via one or more data communication networks (70a, 70b) of the vehicle (10).

14. An automatic collision management system (50a, 50b, 100, 180) as claimed in claim 13, wherein the one or more data communication networks (70a, 70b) are implemented as one or more of: HS_CAN, MS_CAN, CAN, LIN.

15. An automatic collision management system (50a, 50b, 100, 180) as claimed in any one of the preceding claims, wherein the sensor arrangement (100), the processing arrangement (50a, 50b, 100, 180) and the one or more brakes are mutually coupled by plurality of parallel communication network paths (70a, 70b, 190) for improving braking reliability for mitigating or avoiding impact with said one or more oncoming objects.

16. An automatic collision management system (50a, 50b, 100, 180) as claimed in any one of the preceding claims, wherein the system (50a, 50b, 100, 180) is operable for avoiding or mitigating a crash of the vehicle (10) to deploy other operative measures in addition to said automatic selective application of said one or more brakes, said other operative measures including at least one of: adaptive vehicle steering adjustment, driver pedal decoupling, adaptive seatbelt adjustment, air bag deployment, an audio warning, a visual warning.

17. An automatic collision management system (50a, 50b, 100, 180) as claimed in claim 16, wherein the processing arrangement (100) is operable to activate the audio warning and/or the visual warning prior to said one or more brakes being applied to decelerate the vehicle (10).

18. An automatic collision management system (50a, 50b, 100, 180) as claimed in claim 16, wherein said adaptive seatbelt adjustment is operable to tension one or more seatbelts of the vehicle in combination with said one or more brakes being applied to decelerate the vehicle.

19. An automatic collision management system (50a, 50b, 100, 180) as claimed in any one of the preceding claims, wherein the sensor arrangement (100) is also operable to sense precipitation external to the vehicle (10), and the processing arrangement is operable to modify the threshold speed and/or the deceleration of the vehicle (10) in response to the sensed precipitation external to the vehicle (10).

20. A method of providing automatic braking in a vehicle (10), said vehicle (10) including an automatic collision management system (50a, 50b, 100, 180) including a sensor arrangement (100) coupled in communication with a processing arrangement (50a, 50b, 100, 180) and one or more brakes of the vehicle (10); said method including steps of:
(a) employing the sensor arrangement (100) to detect closing velocities of one or more oncoming objects in a direction of travel of the vehicle (10);
(b) receiving information at the processing arrangement (50a, 50b, 100, 180) from the sensor arrangement (100) describing said closing velocities of said one or more oncoming objects, and assessing from said information whether or not a crash between said one or more oncoming objects and the vehicle (10) is likely, and **characterised by**
(c) automatically applying said one or more brakes of the vehicle (10) when a risk of a crash is determined by the processing arrangement to be likely, wherein said automatic braking is applied only if the vehicle (10) is travelling in operation at a speed which is less than a threshold speed,
wherein the threshold speed is in a range of 10 km/hour to 30 km/hour, and wherein the processing arrangement (50a, 50b, 100, 180) is operable to cause the vehicle (10) to decelerate at a rate in a range of 1 metres/second/second to 5 metres/second/second in an event of one or more oncoming objects being detected.

21. A method as claimed in claim 20, wherein the threshold speed is substantially 20 km/hour.

22. A method as claimed in claim 20 or 21, wherein the processing arrangement (50a, 50b, 100, 180) is operable to cause the vehicle (10) to decelerate at a rate of substantially 3 metres/second/second in an event of one or more oncoming objects being detected.

23. A method as claimed in claim 20, including a step of arranging for the sensor arrangement (100) to generate a plurality of infrared beams (400a, 400b, 400c) of optical radiation for sensing said one or more oncoming objects.

24. A method as claimed in claim 23, including a further step of directing the infrared beams (400a, 400b, 400c) of optical radiation through a windscreen (250) of said vehicle (10) for sensing said one or more oncoming objects.

25. A method as claimed in claim 20, wherein the sensor arrangement (100) is also operable to sense precipitation external to the vehicle (10), and the processing arrangement is operable to modify the threshold speed and/or the deceleration of the vehicle (10) in response to the sensed precipitation external to the vehicle (10).

## Patentansprüche

1. Automatisches Kollisions-Management System (50a, 50b, 100, 180) für ein Fahrzeug (10), wobei das Fahrzeug (10) Bedienungseinrichtungen umfasst, die ein oder mehrere Bremsen einschließen, welche beim Anlegen zum Verlangsamen des Fahrzeuges benutzt werden können, wobei das automatische Kollisions-Management System (50a, 50b, 100, 180) eine Sensoranordnung (100), die benutzt werden kann, um Annäherungsgeschwindigkeiten eines oder mehrerer entgegenkommender Objekte im wesentlichen in einer Bewegungsrichtung des Fahrzeuges (10) zu erfassen, und eine Verarbeitungsanordnung (50a, 50b, 100, 180) zum Empfangen von Informationen von der Sensoranordnung (100) hinsichtlich dieser erfassten Annäherungsgeschwindigkeiten umfasst, wobei die Verarbeitungsanordnung (50a, 50b, 100, 180) benutzt werden kann, wenn sich das Fahrzeug (10) unterhalb eines Geschwindigkeitsschwellwerts bewegt, um automatisch wahlfrei die die eine oder die mehreren Bremsen einschließenden Bedienungseinrichtungen zu aktivieren, um das Fahrzeug (10) in Reaktion auf die von der Sensoranordnung (100) empfangenen Informationen zu verlangsamen, um eine Kollision des Fahrzeugs (10) mit dem einen oder den mehreren entgegenkommenden Objekten zu vermeiden oder abzumildern, **dadurch gekennzeichnet, dass** das Kollisions-Management System beim Geschwindigkeitsschwellwert oder oberhalb desselben inaktiv hinsichtlich des Einleitens von automatischem Bremsen ist, dass der Geschwindigkeitsschwellwert in einem Bereich von 10 km/h bis 30 km/h liegt und dass die Verarbeitungsanordnung (50a, 50b, 100, 180) benutzt werden kann, um die eine oder die mehreren Bremsen des Fahrzeugs (10) dazu zu veranlassen, das Fahrzeug mit einer Verzögerung im Bereich von 1 Meter/Sekunde/Sekund bis 5 Meter/Sekunde/Sekunde zu verlangsamen.

2. Automatisches Kollisions-Management System (50a, 50b, 100, 180) nach Anspruch 1, **dadurch gekennzeichnet, dass** der Geschwindigkeitsschwellwert im wesentlichen 20 km/h ist.

3. Automatisches Kollisions-Management System (50a, 50b, 100, 180) nach Anspruch 1 oder 2, **dadurch gekennzeichnet, dass** die Verarbeitungsanordnung (50a, 50b, 100, 180) benutzt werden kann, um die eine oder die mehreren Bremsen des Fahrzeugs (10) dazu zu veranlassen, das Fahrzeug (10) mit einer Verzögerung von im wesentlichen 3 Meter/Sekunde/Sekunde zu verzögern.

4. Automatisches Kollisions-Management System (50a, 50b, 100, 180) nach einem der Ansprüche 1 bis 3, **dadurch gekennzeichnet, dass** die Sensoranordnung (100) einen Annäherungsgeschwindigkeits-Sensor umfasst, der so betrieben werden kann, dass er einen oder mehrere Infrarot-Laser-Sensoren einsetzt, um das eine oder die mehreren entgegenkommenden Objekte zu erfassen.

5. Automatisches Kollisions-Management System (50a, 50b, 100, 180) nach Anspruch 4, **dadurch gekennzeichnet, dass** der eine oder die mehreren Infrarot-Laser-Sensoren (100) so betrieben werden können, dass sie Puls-Echo und / oder optische Doppler-Frequenzverschiebungs-Analyse einsetzen, um das eine oder die mehreren entgegenkommenden Objekte zu erfassen.

6. Automatisches Kollisions-Management System (50a, 50b, 100, 180) nach einem der Ansprüche 1 bis 5, **dadurch gekennzeichnet, dass** die Sensoranordnung (100) benutzt werden kann, um das eine oder die mehreren entgegenkommenden Objekte in einem Abstandsbereich von 4 bis 10 m von dem Fahrzeug (10) zu erfassen.

7. Automatisches Kollisions-Management System (50a, 50b, 100, 180) nach Anspruch 6, **dadurch gekennzeichnet, dass** die Sensoranordnung (100) benutzt werden kann, um das eine oder die mehreren entgegenkommenden Objekte in einem Abstandsbereich von 6 bis 8 m von dem Fahrzeug (10) zu erfassen.

8. Automatisches Kollisions-Management System (50a, 50b, 100, 180) nach einem der Ansprüche 1 bis 7, **dadurch gekennzeichnet, dass** die Sensoranordnung (100) daran angepasst ist, hinter der Windschutzscheibe (250) eines Fahrzeugs (10) montiert zu sein, durch die ein Fahrer (60) des Fahrzeugs (10) einen Bereich vor dem Fahrzeug (10) beobachtet, wobei die Sensoranordnung (100) so betrieben werden kann, dass sie das eine oder die mehreren entgegenkommenden Objekte durch die Windschutzscheibe (250) hindurch erfasst.

9. Automatisches Kollisions-Management System (50a, 50b, 100, 180) nach Anspruch 8, **dadurch gekennzeichnet, dass** die Sensoranordnung (100) daran angepasst ist, zu einem oberen Bereich der Windschutzscheibe (250) hin montiert zu sein.

10. Automatisches Kollisions-Management System (50a, 50b, 100, 180) nach einem der Ansprüche 1 bis 7, **dadurch gekennzeichnet, dass** das Fahrzeug (10) ein Windschutzscheiben-Elektronikmodul (410) umfasst und dass die Sensoranordnung (100) in dem Windschutzscheiben-Elektronikmodul (410) enthalten ist.

11. Automatisches Kollisions-Management System (50a, 50b, 100, 180) nach Anspruch 10, **dadurch gekennzeichnet, dass** das Windschutzscheiben-Elektronikmodul (410) einstückig als eine Einheit mit einer Windschutzscheibe (250) des Fahrzeugs (10) ausgebildet ist.

12. Automatisches Kollisions-Management System (50a, 50b, 100, 180) nach Anspruch 10, **dadurch gekennzeichnet, dass** das Windschutzscheiben-Elektronikmodul (410) zusätzlich zu der Sensoranordnung (100) weitere Sensoren enthält.

13. Automatisches Kollisions-Management System (50a, 50b, 100, 180) nach einem der vorhergehenden Ansprüche, **dadurch gekennzeichnet, dass** die Sensoranordnung (100), die Verarbeitungsanordnung (50a, 50b, 100, 180) und die eine oder die mehreren Bremsen über ein oder mehrere Datenkommunikations-Netzwerke (70a, 70b) des Fahrzeugs (10) in gegenseitiger Kommunikation miteinander gekoppelt sind.

14. Automatisches Kollisions-Management System (50a, 50b, 100, 180) nach Anspruch 13, **dadurch gekennzeichnet, dass** das eine oder die mehreren Datenkommunikations-Netzwerke als eines oder mehrere der folgenden ausgeführt sind: HS_CAN, MS_CAN, CAN, LIN.

15. Automatisches Kollisions-Management System (50a, 50b, 100, 180) nach einem der vorhergehenden Ansprüche, **dadurch gekennzeichnet, dass** die Sensoranordnung (100), die Verarbeitungsanordnung (50a, 50b, 100, 180) und die eine oder die mehreren Bremsen miteinander über eine Mehrzahl paralleler Kommunikations-Netzwerkpfade (70a, 70b, 190) miteinander gekoppelt sind, um die Zuverlässigkeit des Bremsens zum Abmildern oder Vermeiden eines Zusammenpralls mit dem einen oder den mehreren entgegenkommenden Objekten zu verbessern.

16. Automatisches Kollisions-Management System (50a, 50b, 100, 180) nach einem der vorhergehenden Ansprüche, **dadurch gekennzeichnet, dass** das System (50a, 50b, 100, 180) zum Vermeiden oder Abmildern eines Aufpralls des Fahrzeugs (10) so benutzt werden kann, dass es zusätzlich zu dem automatischen wahlfreien Anlegen der einen oder der mehreren Bremsen weitere Bedienungs-Aktionen auslöst, wobei diese anderen Bedienungs-Aktionen mindestens eines der folgenden beinhalten: Einstellung der adaptiven Fahrzeuglenkung, Abkuppeln eines Fahrerpedals, Einstellung des adaptiven Sicherheitsgurtes, Airbag-Auslösung, eine hörbare Warnung, eine visuelle Warnung.

17. Automatisches Kollisions-Management System (50a, 50b, 100, 180) nach Anspruch 16, **dadurch gekennzeichnet, dass** die Verarbeitungsanordnung (100) benutzt werden kann, um die hörbare Warnung und / oder die visuelle Warnung zu aktivieren, bevor die eine oder die mehreren Bremsen angelegt werden, um das Fahrzeug (10) zu verlangsamen.

18. Automatisches Kollisions-Management System (50a, 50b, 100, 180) nach Anspruch 16, **dadurch gekennzeichnet, dass** die Einstellung des adaptiven Sicherheitsgurtes benutzbar ist, um in Verbindung mit dem Anlegen der einen oder der mehreren Bremsen zum Verlangsamen des Fahrzeugs einen oder mehrere Sicherheitsgurte des Fahrzeuges zu straffen.

19. Automatisches Kollisions-Management System (50a, 50b, 100, 180) nach einem der vorhergehenden Ansprüche, **dadurch gekennzeichnet, dass** die Sensoranordnung (100) auch benutzbar ist, um Niederschlag außerhalb des Fahrzeugs (10) zu erfassen, und dass die Verarbeitungsanordnung benutzt werden kann, um den Geschwindigkeitsschwellwert und / oder die Verzögerung des Fahrzeugs (10) in Abhängigkeit von dem erfassten Niederschlag außerhalb des Fahrzeugs (10) zu verändern.

20. Verfahren zum Herbeiführen von automatischem Bremsen bei einem Fahrzeug (10), wobei das Fahrzeug (10) ein automatisches Kollisions-Management System (50a, 50b, 100, 180) beinhaltet, welches eine kommunizierend mit einer Verarbeitungsanordnung (50a, 50b, 100, 180) und einer oder mehreren Bremsen des Fahrzeugs (10) gekoppelte Sensoranordnung (100) beinhaltet, wobei das Verfahren folgende Schritte umfasst:
(a) Verwenden der Sensoranordnung (100) zum Erfassen von Annäherungsgeschwindigkeiten von einem oder mehreren entgegenkommenden Objekten in einer Bewegungsrichtung des Fahrzeugs (10);
(b) Empfangen von Informationen von der Sensoranordnung (100), welche die Annäherungsgeschwindigkeiten der einen oder mehreren entgegenkommenden Objekte beschreiben, durch die Verarbeitungsanordnung (50a, 50b, 100, 180), und Ermitteln aus den Informationen, ob ein Aufprall zwischen dem einen oder mehreren entgegenkommenden Objekten und dem Fahrzeug (10) wahrscheinlich ist, und **dadurch gekennzeichnet ist, dass**
(c) automatisch die eine oder die mehreren Bremsen des Fahrzeugs (10) angelegt werden, wenn durch die Verarbeitungsanordnung bestimmt wird, dass ein Risiko eines Aufpralls wahrscheinlich ist, wobei die Bremsen nur automatisch angelegt werden, wenn das Fahrzeug (10) sich im Betrieb mit einer Geschwindigkeit bewegt, die unterhalb eines Geschwindigkeitsschwellwertes liegt, wobei der Geschwindigkeitsschwellwert in einem Bereich zwischen 10 km/h und 30 km/h liegt und wobei die Verarbeitungsanordnung (50a, 50b, 100, 180) benutzt werden kann, um das Fahrzeug (10) mit einer Verzögerung im Bereich von 1 Meter/Sekunde/Sekunde bis 5 Meter/Sekunde/Sekunde zu verlangsamen, falls ein oder mehrere entgegenkommende Objekte erkannt werden.

21. Verfahren nach Anspruch 20, **dadurch gekennzeichnet, dass** der Geschwindigkeitsschwellwert im Wesentlichen 20 km/h beträgt.

22. Verfahren nach Anspruch 20 oder 21, **dadurch gekennzeichnet, dass** die Verarbeitungsanordnung (50a, 50b, 100, 180) benutzt werden kann, um das Fahrzeug (10) mit einer Verzögerung von im Wesentlichen 3 Meter/Sekunde/Sekunde zu verlangsamen, falls ein oder mehrere entgegenkommende Objekte erkannt werden.

23. Verfahren nach Anspruch 20, **dadurch gekennzeichnet, dass** es einen Schritt umfasst, in dem dafür gesorgt wird, dass die Sensoranordnung (100) eine Mehrzahl von optischen Infrarotstrahlen (400a, 400b, 400c) zum Erfassen des einen oder der mehreren entgegenkommenden Objekte erzeugt.

24. Verfahren nach Anspruch 23, **dadurch gekennzeichnet, dass** es einen weiteren Schritt umfasst, in dem die optischen Infrarotstrahlen (400a, 400b, 400c) durch eine Windschutzscheibe (250) des Fahrzeugs (10) gerichtet werden, um das eine oder die mehreren entgegenkommenden Objekte zu erfassen.

25. Verfahren nach Anspruch 20, **dadurch gekennzeichnet, dass** die Sensoranordnung (100) auch benutzt werden kann, um Niederschlag außerhalb des Fahrzeugs (10) zu erfassen, und dass die Verarbeitungsanordnung benutzt werden kann, um den Geschwindigkeitsschwellwert und / oder die Verzögerung des Fahrzeugs (10) in Abhängigkeit von dem erfassten Niederschlag außerhalb des Fahrzeugs (10) zu verändern.

## Revendications

1. Système de gestion de collision automatique (50a, 50b, 100, 180) pour un véhicule (10), ledit véhicule (10) comprenant des caractéristiques opérationnelles englobant un ou plusieurs freins servant, lorsqu'ils sont appliqués, à décélérer ledit véhicule (10), ledit système de gestion de collision automatique (50a, 50b, 100, 180) englobant un ensemble détecteur (100) servant à détecter des vitesses de rapprochement d'un ou plusieurs objets se rapprochant sensiblement dans une direction de circulation du véhicule (10), et un ensemble de traitement (50a, 50b, 100, 180) destiné à recevoir des informations dudit ensemble détecteur (100) indicatrices desdites vitesse de rapprochement détectées, ledit ensemble de traitement (50a, 50b, 100, 180) étant utilisable lorsque le véhicule (10) circule au-dessous d'une vitesse de seuil pour appliquer, de manière automatique et sélective, lesdites caractéristiques opérationnelles englobant ledit un ou plusieurs freins pour décélérer le véhicule (10) en réponse auxdites informations reçues dudit ensemble détecteur (100) afin d'éviter ou d'atténuer une collision du véhicule (10) avec un ou plusieurs objets se rapprochant, ***caractérisé par le fait que*** ledit système de gestion de collision est inactif à fournir un freinage automatique à la vitesse de seuil ou au-dessus de celle-ci, ladite vitesse de seuil étant comprise dans une plage de 10 km/heure à 30 km/heure, et l'ensemble de traitement (50a, 50b, 100, 180) est utilisable pour obliger le ou les freins du véhicule (10) à décélérer le véhicule selon un coefficient compris entre 1 mètre/seconde/seconde et 5 mètres/seconde/ seconde.

2. Système de gestion de collision automatique (50a, 50b, 100, 180) selon la revendication 1, dans lequel la vitesse de seuil est sensiblement égale à 20 km/heure.

3. Système de gestion de collision automatique (50a, 50b, 100, 180) selon la revendication 1 ou 2, dans lequel le système de traitement (50a, 50b, 100, 180) est utilisable pour obliger le ou les freins du véhicule (10) à décélérer le véhicule selon un coefficient de 3 mètres/seconde/seconde.

4. Système de gestion de collision automatique (50a, 50b, 100, 180) selon l'une quelconque des revendications 1 à 3, dans lequel l'ensemble détecteur (100) comprend un détecteur de vitesse de rapprochement utilisable pour mettre en oeuvre un ou plusieurs capteurs laser infrarouge destinés à la détection d'un ou plusieurs objets se rapprochant.

5. Système de gestion de collision automatique (50a, 50b, 100, 180) selon la revendication 4, dans lequel le(s)dit(s) un ou plusieurs capteurs laser infrarouge (100) sont utilisables pour mettre en oeuvre une analyse par décalage en fréquence par effet Doppler optique et/ou par impulsion écho pour détecter le(s)dit(s) un ou plusieurs objets se rapprochant.

6. Système de gestion de collision automatique (50a, 50b, 100, 180) selon l'une quelconque des revendications 1 à 5, dans lequel ledit ensemble détecteur (100) est utilisable pour détecter le(s)dit(s) un ou plusieurs objets se rapprochant à une distance du véhicule (10) comprise entre 4 et 10 mètres.

7. Système de gestion de collision automatique (50a, 50b, 100, 180) selon la revendication 6, dans lequel ledit ensemble détecteur (100) est utilisable pour détecter le(s)dit(s) un ou plusieurs objets se rapprochant à une distance du véhicule (10) comprise entre 6 et 8 mètres.

8. Système de gestion de collision automatique (50a, 50b, 100, 180) selon l'une quelconque des revendications 1 à 7, dans lequel l'ensemble détecteur (100) est apte à être monté derrière un pare-brise (250) du véhicule (10) à travers lequel un conducteur (60) du véhicule (10) observe une zone à l'avant du véhicule (10), l'ensemble détecteur (100) étant utilisable pour détecter à travers le pare-brise (250) l'un ou les objets se rapprochant.

9. Système de gestion de collision automatique (50a, 50b, 100, 180) selon la revendication 8, dans lequel ledit ensemble détecteur (100) est apte à être monté dans une zone supérieure du pare-brise (250).

10. Système de gestion de collision automatique (50a, 50b, 100, 180) selon l'une quelconque des revendications 1 à 7, dans lequel ledit véhicule (10) comprend un module électronique (410) de pare-brise, et ledit ensemble détecteur (100) est englobé dans ledit module électronique (410) de pare-brise.

11. Système de gestion de collision automatique (50a, 50b, 100, 180) selon la revendication 10, dans lequel le module électronique (410) de pare-brise fait partie intégrante, sous forme d'unité, d'un pare-brise (250) du véhicule (10).

12. Système de gestion de collision automatique (50a, 50b, 100, 180) selon la revendication 10, dans lequel le module électronique (410) de pare-brise comprend d'autres capteurs en plus de l'ensemble détecteur (100).

13. Système de gestion de collision automatique (50a, 50b, 100, 180) selon l'une quelconque des revendications précédentes, dans lequel l'ensemble détecteur (100), l'ensemble de traitement (50a, 50b, 100, 180) et le ou les freins sont couplés en communication mutuelle par l'intermédiaire d'un ou plusieurs réseaux (70a, 70b) de communication de données du véhicule (10).

14. Système de gestion de collision automatique (50a, 50b, 100, 180) selon la revendication 13, dans lequel le(s)dit(s) un ou plusieurs réseaux (70a, 70b) de communication de données sont mis en oeuvre sous forme de l'un ou plusieurs d'entre : HS_CAN, MS_CAN, CAN, LIN.

15. Système de gestion de collision automatique (50a, 50b, 100, 180) selon l'une quelconque des revendications précédentes, dans lequel l'ensemble détecteur (100), l'ensemble de traitement (50a, 50b, 100, 180) et le ou les freins sont couplés mutuellement par une pluralité de trajets de réseaux de communication parallèles (70a, 70b, 190) afin d'améliorer la fiabilité du freinage pour atténuer ou éviter une collision avec le(s)dit(s) objet(s) se rapprochant.

16. Système de gestion de collision automatique (50a, 50b, 100, 180) selon l'une quelconque des revendications précédentes, dans lequel le système (50a, 50b, 100, 180) est utilisable pour éviter ou atténuer une collision du véhicule (10) en déployant d'autres mesures opérationnelles en sus de ladite application sélective automatique dudit ou desdits freins, lesdites autres mesures opérationnelles englobant au moins l'une d'entre : ajustement adaptatif de la direction du véhicule, découplage de la pédale du conducteur, réglage adaptatif des ceintures de sécurité, gonflage de coussin(s) gonflable(s) de sécurité, avertissement radio, avertissement visuel.

17. Système de gestion de collision automatique (50a, 50b, 100, 180) selon la revendication 16, dans lequel l'ensemble de traitement (100) est utilisable pour déclencher l'avertissement audio et/ou l'avertissement visuel avant que le(s)dit(s) freins ne soi(en)t appliqué(s) pour décélérer le véhicule (10).

18. Système de gestion de collision automatique (50a, 50b, 100, 180) selon la revendication 16, dans lequel ledit réglage adaptatif des ceintures de sécurité est utilisable pour tendre une ou plusieurs ceintures de sécurité du véhicule en liaison avec l'application d'un ou plusieurs freins pour décélérer le véhicule.

19. Système de gestion de collision automatique (50a, 50b, 100, 180) selon l'une quelconque des revendications précédentes, dans lequel l'ensemble détecteur (100) est également utilisable pour détecter une précipitation extérieure au véhicule (10), et l'ensemble de traitement est utilisable pour modifier la vitesse de seuil et/ou la décélération du véhicule (10) en réponse à la précipitation extérieure au véhicule (10) qui a été détectée.

20. Procédé pour assurer un freinage automatique dans un véhicule (10), ledit véhicule (10) comprenant un système de gestion de collision automatique (50a, 50b, 100, 180) comportant un ensemble détecteur (100) couplé en communication avec un ensemble de traitement (50a, 50b, 100, 180) et un ou plusieurs freins du véhicule (10), ledit procédé comprenant les étapes consistant à :
(a) utiliser l'ensemble détecteur (100) pour détecter des vitesses de rapprochement d'un ou plusieurs objets se rapprochant dans une direction de circulation du véhicule (10) ;
(b) recevoir de l'ensemble détecteur (100) et envoyer dans l'ensemble de traitement (50a, 50b, 100, 180) des informations décrivant lesdites vitesses de rapprochement dudit/desdits un ou plusieurs objets se rapprochant, et évaluer lesdites informations pour estimer si une collision entre ledit ou lesdits objets se rapprochant et le véhicule (10) est probable ou non, et ***caractérisé par***
(c) l'actionnement automatique dudit ou desdits freins du véhicule (10) lorsqu'un risque de collision est déterminé par l'ensemble de traitement comme probable, dans lequel ledit freinage automatique n'est appliqué que si le véhicule (10) circule à une vitesse qui est inférieure à une vitesse de seuil, la vitesse de seuil étant comprise dans une plage de 10 km/heure à 30 km/heure, et l'ensemble de traitement (50a, 50b, 100, 180) étant utilisable pour provoquer la décélération du véhicule (10) selon un coefficient compris entre 1 mètre/seconde/seconde et 5 mètres/seconde/seconde dans l'éventualité où un ou plusieurs objets se rapprochant ont été détectés.

21. Procédé selon la revendication 20, dans lequel la vitesse de seuil est sensiblement de 20 km/h.

22. Procédé selon la revendication 20 ou 21, dans lequel l'ensemble de traitement (50a, 50b, 100, 180) est utilisable pour provoquer la décélération du véhicule (10) selon un coefficient de sensiblement 3 mètres/seconde/seconde dans l'éventualité où un ou plusieurs objets se rapprochant ont été détectés.

23. Procédé selon la revendication 20, englobant une étape d'adaptation de l'ensemble détecteur (100) pour qu'il génère une pluralité de faisceaux infrarouges (400a, 400b, 400c) de rayonnement optique pour la détection dudit ou desdits objets se rapprochant.

24. Procédé selon la revendication 23, englobant une étape supplémentaire consistant à diriger les faisceaux infrarouges (400a, 400b, 400c) du rayonnement optique à travers un pare-brise (250) dudit véhicule (10) pour la détection dudit ou desdits objets se rapprochant.

25. Procédé selon la revendication 20, dans lequel l'ensemble détecteur (100) est également utilisable pour détecter une précipitation extérieure au véhicule (10), et l'ensemble de traitement est utilisable pour modifier la vitesse de seuil et/ou la décélération du véhicule (10) en réponse à la précipitation extérieure au véhicule (10) qui a été détectée.
